# DEMANDE DE BREVET EUROPEEN

(11) **EP 1 930 838 A1**
(43) Date de publication de la demande: **11.06.2008**
(21) Numéro de dépôt: 06301230.6
(22) Date de dépôt: 08.12.2006
(51) Int. Cl.: G06K 7/00, G06K 19/08

(54) **Procédé et dispositifs destinés à empêcher l'utilisation d'un objet portable sans contact à l'insu de son porteur**

(71) Demandeur: GEMPLUS, 13420 Gémenos (FR)
(72) Inventeur: Arnoux, Christophe, 04220 Corbières (FR)

(57) **Abrégé**

La présente invention concerne un procédé et des dispositifs destinés à empêcher l'établissement de la communication radio fréquence d'un premier objet portable sans contact avec un second objet sans contact, à l'insu du porteur de cet objet portable. A cette fin l'invention propose la vérification, par le premier objet portable sans contact, d'une information externe attendue.

## Description

Le domaine de la présente invention est celui des communications sans contact.

Plus précisément, la présente invention concerne un procédé et des dispositifs destinés à empêcher l'établissement de la communication (radiofréquence) entre un premier objet portable sans contact et un second objet sans contact, à l'insu du porteur de cet objet portable.

Certains objets portables sans contact, tels que les cartes à puce, fonctionnent par télé-alimentation. Ces supports tirent l'énergie nécessaire à leur fonctionnement d'un champ électromagnétique produit et envoyé par le lecteur de carte avec lequel ils doivent dialoguer. De surcroît, ce champ électromagnétique véhicule les données échangées entre la carte et le lecteur au cours d'une communication dite radiofréquence.
Ce champ électromagnétique est donc nécessaire et suffisant à la fois pour l'alimentation de la carte à puce et pour l'établissement d'une communication entre le lecteur et la carte.
Dans tous les cas, les objets portables sans contact fonctionnent sans lien ni contact physique avec l'objet sans contact qui fait office de lecteur. Ces deux objets peuvent donc ne pas être en vue directe l'un de l'autre.
La conséquence de cette situation est qu'il est possible d'interroger un objet portable sans contact sans que son porteur (en général son propriétaire) ne s'en rende compte et/ou ne soit consentant à cette interrogation, ce qui ouvre la voie à un nouveau type d'attaque sur les objets portables sans contact, et notamment sur les cartes à puces aptes à effectuer des paiements ou les passeports électroniques.
En particulier, il est envisageable d'utiliser un objet portable sans contact (par exemple une carte) à l'insu de son propriétaire en augmentant la distance entre un lecteur et cette carte au moyen de relais formant un pont de communication entre la carte et le lecteur.
Par exemple, si une personne est en possession d'une carte de paiement sans contact, l'attaquant va profiter de la proximité d'une station de métro, pour essayer de lui faire payer une transaction à son insu. Pour cela, il pourra approcher de la carte un objet qui fera office de lecteur du point de vue de la carte (par exemple un agenda électronique personnel (PDA) modifié). A distance, un autre attaquant approchera du lecteur officiel (capable de valider la transaction de paiement), un objet qui fera office de carte du point de vue du lecteur (un agenda électronique personnel (PDA) modifié par exemple).
Ainsi, en établissant une communication entre les deux PDA (par liaison Bluetooth, WIFI ou Internet par exemple), il est possible de transmettre au lecteur les véritables communications issues de la carte, et à la carte les véritables communications issues du lecteur. Ainsi, malgré une grande distance pouvant séparer les deux objets, une paire d'attaquants peut réaliser une transaction à l'insu du porteur de la carte.

Ce problème peut éventuellement être résolu par la mise en oeuvre de solutions existantes.
Dans la suite de la présente description on se placera dans un contexte particulier des objets portables sans contact, à savoir celui des cartes à puce sans contact. L*'* objet sans contact communicant avec les cartes en question sera nommé par l'appellation générique de « lecteur ». Ces précisions doivent être vues comme un exemple, et ne restreignent en aucun cas la portée de la présente invention qui reste applicable à l'ensemble des objets portables pouvant communiquer sans contact tels que passeports, les agendas électroniques, les téléphones sans fil, etc.

Pour résoudre le problème décrit plus haut, il a déjà été proposé de bloquer l'utilisation d'une carte sans contact tant que son utilisateur n'appuie pas sur un bouton poussoir équipant cette carte.
Cette solution s'est avérée très difficile à mettre en oeuvre en conservant les contraintes ISO telle que définies dans les normes, par exemple les normes ISO 7816-1 et ISO 7816-2.
De plus cette solution, outre de forts coûts de fabrication, génère une forte altération de la fiabilité du bouton poussoir au fil du temps.

Il a également été proposé d'empêcher toute utilisation intempestive de la carte en glissant cette dernière dans un étui métallique, le métal ayant la propriété de bloquer les ondes électromagnétiques.
Cette solution à comme inconvénients majeurs les contraintes qu'elle engendre pour l'utilisateur. En effet, l'usage de la carte par son porteur légitime ne peut se faire que si celui-ci extrait la carte de son étui. Cette contrainte va à l'encontre de la philosophie du « Tap and Go ». Le « Tap and Go » est un principe qui veut qu'une transaction sans contact se fasse en passant la carte devant le lecteur, dans un mouvement fluide. L'idée sous-jacente est de ne pas obliger l'utilisateur à attendre. Il est communément admis que la transaction doit se réaliser en moins de 200 millisecondes pour répondre à cette contrainte. Extraire la carte de son étui et faire l'opération inverse en fin de transaction est en désaccord avec ce principe.

Il a également été proposé d'obliger l'utilisateur d'une carte sans contact à présenter un élément d'identification supplémentaire sur le lecteur, tel qu'un code secret, pour valider la transaction entre la carte et le lecteur. Un exemple est le cas de certains passeports qui sont lus par un lecteur sans contact, puis qui nécessitent, sur le clavier du lecteur, la saisie d'un numéro de série présent sur le corps du passeport. Ici encore, nous sommes en contradiction avec le principe du « Tap and Go ». Qui plus est, un contact physique entre l'utilisateur et le lecteur est ici nécessaire pour la saisie de l'information en question, ce qui rapproche cette solution de celle des cartes à contact et diminue de ce fait l'intérêt des transactions sans contact.

Dans ce contexte, la présente invention à pour but de proposer une solution alternative, solutionnant les inconvénients cités précédemment et présentant des avantages propres.

A cet effet, l'invention revendiquée propose un procédé conforme à la revendication 1, ainsi que des dispositifs, eux même conformes aux revendications indépendantes respectives.

D'autres caractéristiques et avantages de l'invention ressortiront clairement de la description qui en est faite ci-après, à titre indicatif et nullement limitatif, en référence aux dessins annexés dans lesquels :
- La figure 1 représente un système dans lequel un lecteur est capable d'émettre une information externe autre que radiofréquence à l'attention d'un objet portable sans contact ;
- La figure 2 représente un organigramme de la mise en oeuvre du procédé selon l'invention ;
- La figure 3 représente un système dans lequel l'objet portable sans contact reçoit l'information externe d'une source autre qu'un lecteur.

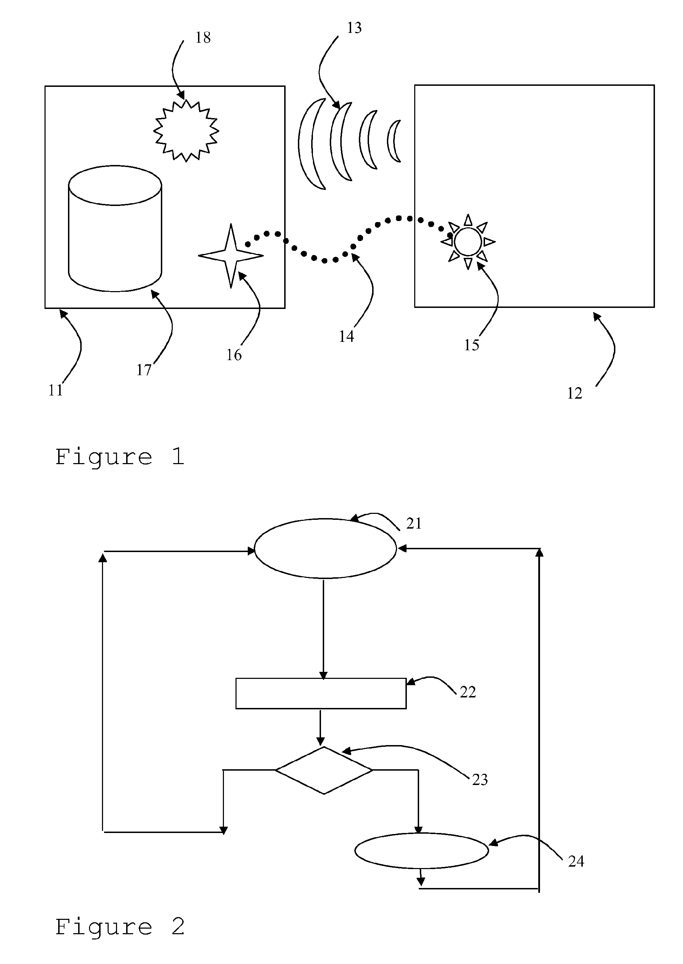

La figure 1 représente un système dans lequel un lecteur est capable d'émettre une information externe autre que radiofréquence à l'attention d'un objet portable sans contact.
Cette figure montre un objet portable sans contact 11 comportant un capteur 16, une mémoire 17 et un processeur 18. Cette figure montre en outre un objet sans contact 12 comportant un émetteur 15 qui sera plus précisément décrit par la suite.
Ces deux objets peuvent communiquer par ondes radiofréquence 13 et par un autre média de communication sans contact 14.

L'objet sans contact 12 est typiquement un lecteur et possède un émetteur 15 capable de générer une information externe 14. Cette information externe 14 à comme particularité d'être altérée par l'interposition d'un matériau opaque entre l'émetteur 15 et le capteur 16. Dans un cas particulier de réalisation de l'invention, cette information externe 14 est une information lumineuse. Dans ce cas, il est évident que l'interposition d'une matière opaque empêche la réception de cette information.
En fait, nous sommes typiquement dans le cas où l'objet portable sans contact est une carte puce, et ou cette carte se trouve dans la poche d'une veste, dans un sac à main, ou dans un portefeuille. Dans toutes ces configurations, la carte ne peut recevoir l'information lumineuse émise par le lecteur. Lorsque la carte est sollicitée par un signal radiofréquence tentant d'instaurer une communication, le code exécutable interne de la carte, contenu dans la mémoire 17, va s'exécuter dans le processeur 18. Une des premières commandes est une vérification du capteur 16. La carte va vérifier si le capteur 16 reçoit bien l'information qu'il attend. Si le capteur ne reçoit pas l'information lumineuse, cela signifie que la carte se trouve toujours dans un lieu ou elle n'est pas sensée fonctionner (par exemple elle est toujours dans le portefeuille ou le sac à main). La tentative de communication se fait donc à l'insu du porteur de la carte. Dans ce cas, le microprocesseur 18 ordonne à la carte de ne pas poursuivre l'initialisation de la communication radiofréquence 13, ou de ne pas y répondre.

Dans un mode de réalisation particulier, l'information externe 14 sera un signal infrarouge. Ce signal particulier permet à l'émetteur de coder l'information 14 afin de transmettre un message, et qui permettra à la carte d'authentifier avec plus de certitude la présence d'un lecteur autorisé à communiquer avec cette carte.
Dans un autre mode de réalisation, le lecteur pourra générer, à sa proximité, une température prédéfinie 14. Dans ce cas là, la carte n'acceptera d'initier une communication radiofréquence 13 que si son capteur 16 reçoit une température 14 attendue. Dans ce cas, l'utilisation d'un matériau opaque ne bloque pas l'information, mais l'altère. En effet, si la carte se trouve dans une poche de vêtement, un sac ou un portefeuille, ces objets vont servir de protection thermique. Ainsi, un attaquant qui tenterait, à l'insu du porteur de la carte, de re-générer, près de la carte, l'environnement thermique du lecteur, échouerait à cause de l'influence de ces matériaux.

La figure 2 représente un organigramme de la mise en oeuvre, dans l'objet portable sans contact, du procédé selon l'invention.
Cette figure présente une étape de repos 21, une étape de capture 22 d'une information externe, une étape de choix 23 en fonction du résultat de la capture, et une étape 24 de réalisation d'une communication radiofréquence.
Lors de la réception d'une tentative de communication radiofréquence, l'objet portable va sortir de l'état de repos 21 pour entrer dans un état 22, état dans lequel il va capturer, via un capteur embarqué, une information externe. Cette information peut être un rayonnement infrarouge particulier par exemple. Une fois cette étape de capture réalisée, l'objet portable va vérifier si cette capture correspond à ce qu'il attendait, lors de l'étape 23. Cette information peut être un rayonnement infrarouge particulier par exemple. Si ce test est concluant, ce qui signifie que l*'*information externe capturée par le capteur correspond à celle qui était attendue, l'objet portable passe dans l'état 24. Dans cet état, l'objet portable va accepter la communication radiofréquence, et réaliser la transaction demandée normalement.
En revanche, si lors du test 23, l'information externe relevée par le capteur ne correspond pas à celle qui était attendue, cela signifie que l'objet portable ne se trouve pas dans les conditions de fonctionnement initialement prévues. On peut alors émettre l'hypothèse que la carte est activée à l'insu de son porteur. Dans ce cas là, la communication radiofréquence est refusée, et l'objet se replace dans l'état d'attente 21.

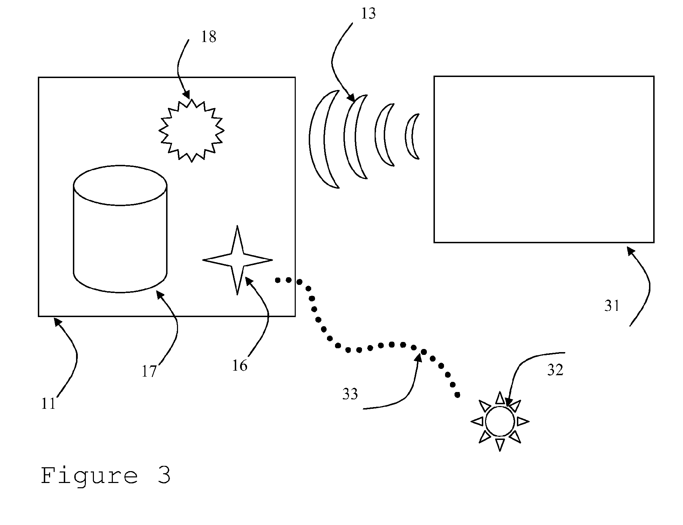

La figure 3 représente un système dans lequel l'objet portable sans contact reçoit l'information externe d'une source autre qu'un lecteur.
Dans ce mode de réalisation, un objet portable sans contact 31 est capable de communiquer avec un autre objet sans contact 32. Ces deux appareils communiquent via des échanges radiofréquence 33.
Une source 35, extérieure aux objets 31 et 32, produit une information externe 34. L'objet portable 31 possède un capteur 36, capable de recevoir l'information 34. Nous sommes, par exemple, dans le cas où l'information attendue est un rayonnement infrarouge, et où, pour ne pas avoir à modifier le lecteur, l'ensemble de la zone où se trouve le lecteur est baignée de lumière infrarouge. Cette lumière viendra par exemple de diodes infrarouges, réparties à proximité. Ainsi, la carte (objet portable sans contact) n'acceptera la communication radiofréquence avec le lecteur que si son capteur détecte le rayonnement infrarouge des diodes.

Dans un mode de réalisation particulier, l'information externe, recherchée par la carte pour autoriser l'instigation d'une communication radiofréquence est de la lumière blanche naturelle. Dans ce cas, la carte va uniquement vérifier qu'elle a été extraite d'un éventuel d'une éventuelle protection tel qu'une poche de vêtement, un sac ou un portefeuille. Le capteur est dans ce cas là une simple cellule photoélectrique et la détection de lumière entraîne l'autorisation de l'établissement de la transaction.

Dans un autre mode de réalisation, en cas d'autorisation de la communication radiofréquence, l'objet portable sans contact pourra vérifier au cours de la communication, que l'information externe est toujours présente, et correspond toujours à ce qui est attendu.

La nature de l'information externe susceptible d'être utilisée selon l'invention ne se limite en aucun cas aux différents spectres lumineux ou à une température. Toute information susceptible d'être altérée par l'interposition d'un matériau opaque est couverte par la présente invention. Les matériaux opaques englobent, entre autres, les vêtements, les sacs, les portefeuilles, ...

Il est envisageable de faire coder un message d'identification par cette information externe, et de vérifier la présence de ce message pour autoriser l'établissement d'une communication radio fréquence.

Dans tous ces modes de réalisation, l'objet portable sans contact pourra vérifier l'information externe pendant une communication radio fréquence établie.

L'objet portable peut être une pièce d'identité telle qu'un passeport.

L'invention concerne également un objet portable sans contact apte à communiquer par communication radio fréquence avec un second objet sans contact, comprenant au moins un capteur d'une information externe, la réception de cette information externe étant altérée par l'interposition d'un matériau opaque entre le capteur et la source de cette information externe. Cet objet portable autorise l'établissement de la communication radio fréquence lorsque le capteur détecte la présence de l'information externe.

L'invention concerne également un objet sans contact comprenant un émetteur d'une information, dite information externe, à l'attention d'un autre objet sans contact, cette information externe étant altérée par l'interposition d'un matériau opaque entre l'émetteur et l'autre objet sans contact.

Outre le fait de répondre aux problèmes de sécurité vis à vis des attaques relais, la présente invention à un second effet : elle permet de discriminer un objet portable sans contact parmi plusieurs. En effet, si un porteur légitime a plusieurs cartes sans contact sur lui, le fait de mettre une carte dans le champ d'un lecteur va très probablement activer tout ou partie des autres cartes.

Le problème est donc de pouvoir discriminer ces cartes. En mettant en oeuvre la présente invention, seule la carte (ou l'objet portable sans contact) mis en contact avec l'information externe attendue, pourra répondre aux sollicitations du lecteur. En effet, par définition de l'information externe, le simple fait de laisser les autres carte rangées (dans un sac, une poche de vêtement ou tout autre endroit opaque) suffira à les exclure d'une activation fortuite.

## Revendications

1. - Procédé destiné à empêcher l'établissement de la communication radio fréquence (13) d'un premier objet portable sans contact (11) avec un second objet sans contact (12), à l'insu du porteur dudit premier objet portable (11),
**caractérisé en ce que** ledit premier objet portable (11) comprend au moins un capteur (16) d'une information externe (14, 33), la réception de ladite information externe (14, 33) étant altérée par l'interposition d'un matériau opaque entre ledit capteur (16) et la source (15, 32) de ladite information externe (14, 33) et **en ce que** ledit premier objet portable autorise (23) l'établissement de ladite communication radiofréquence (13) lorsque ledit capteur (16) détecte la présence de ladite information externe (14, 33).

2. Procédé selon la revendication 1, **caractérisé en ce que** ladite information externe (14, 33) est un rayonnement lumineux.

3. Procédé selon la revendication 2, **caractérisé en ce que** ledit rayonnement lumineux (14, 33) est émis dans le spectre des infrarouges.

4. Procédé selon l'une des revendications 1 à 3, **caractérisé en ce que** ladite information externe (14, 33) code un message d'identification nécessaire à l'établissement de ladite communication radio fréquence (13).

5. Procédé selon la revendication 1, **caractérisé en ce que** ladite information externe (14, 33) est un rayonnement thermique.

6. Procédé selon l'une des revendications 1 à 5, **caractérisé en ce que** ledit premier objet portable (11) vérifie ladite information externe (14, 33) pendant ladite communication radio fréquence (13).

7. Procédé selon l'une des revendications précédentes, **caractérisé en ce que** ledit premier objet portable (11) est une pièce d'identité telle qu'un passeport.

8. Objet portable sans contact (11) apte à communiquer par communication radio fréquence (13) avec un second objet sans contact (12), **caractérisé en ce qu'**il comprend au moins un capteur (16) d*'*une information externe (14, 33), la réception de ladite information externe (14) étant altérée par l'interposition d'un matériau opaque entre le capteur (16) et la source (15, 32) de ladite information externe (14, 33) et **en ce qu'**il autorise (23) l'établissement de ladite communication radio fréquence lorsque ledit capteur détecte (22) la présence de ladite information externe (14, 33).

9. Objet portable (11) selon la revendication 8, **caractérisé en ce que** ledit capteur (16) est un capteur de lumière.

10. Objet portable (11) selon la revendication 9, **caractérisé en ce que** ledit capteur (16) est un capteur infrarouge.

11. Objet portable (11) selon la revendication 8, **caractérisé en ce que** ledit capteur (16) est un capteur de température.

12. Objet portable (11) selon l'une des revendications 8 à 11, **caractérisé en ce que** ledit premier objet sans contact (11) est une pièce d'identité telle qu'un passeport.

13. Objet sans contact (12) destiné à communiquer avec un autre objet sans contact (11),
**caractérisé en ce qu'**il comprend un émetteur (15) d'une information (14, 33), dite information externe, à l'attention dudit autre objet sans contact (11), ladite information externe (14, 33) étant altérée par l'interposition d'un matériau opaque entre ledit émetteur (15) et ledit autre objet sans contact (11).

14. Objet sans contact (12) selon la revendication 13, **caractérisé en ce que** ladite information (14) est un rayonnement infrarouge.
